# EUROPÄISCHE PATENTANMELDUNG

(11) **EP 1 643 067 A2**
(43) Veröffentlichungstag der Anmeldung: **05.04.2006**
(21) Anmeldenummer: 05020203.5
(22) Anmeldetag: 16.09.2005
(51) Int. Cl.: E05F 15/20, E05F 5/00

(54) **Kollisionsschutzvorrichtung zum Verhindern der Öffnungsbewegung einer Schiebetür eines Kraftwagens**

(30) Priorität: 17.09.2004 DE 102004045126
(71) Anmelder: DaimlerChrysler AG, 70567 Stuttgart (DE)
(72) Erfinder: Hipp, Dirk, 72144 Dusslingen (DE); Drummond, Jacoy, 71139 Ehningen (DE); Mettke, Andreas, 70736 Fellbach (DE); Rein, Andreas, 70374 Stuttgart (DE)

(57) **Zusammenfassung**

Die Erfindung betrifft eine Kollisionsschutzvorrichtung zur Verhinderung der Öffnungsbewegung (32) einer Schiebetür (4) eines Kraftwagens (2) in den Bewegungsbereich (8) einer Heckdrehtür (12). Es ist ein Detektor vorgesehen, der zur Erfassung der Position der Heckdrehtür(12) dient. Der Detektor wirkt mit einer Anhaltevorrichtung (10) zusammen, die in einem drohenden Kollisionsfall ein Anhalten der Schiebetür (4) bewirkt. Die Erfindung zeichnet sich dadurch aus, dass die Heckdrehtür (12) einen Türfeststeller (14) aufweist, der mit dem Detektor versehenen ist.

## Beschreibung

Die Erfindung betrifft eine Kollisionsschutzvorrichtung zum Verhindern der Öffnungsbewegung einer Schiebetür eines Kraftwagens nach dem Oberbegriff des Patentanspruchs 1.

Flexibel beladbare Fahrzeuge wie beispielsweise Kleinlastwagen, Vans oder Busse erfreuen sich auf dem Markt zunehmender Beliebtheit. Die Waren- oder Personen-Transporträume dieser Fahrzeuge können entweder aus einem Heckbereich oder von der Fahrzeugseite her be- und entladen werden. Hierfür können die Fahrzeuge eine Heckdrehtür aufweisen, die aus einer Geschlossenstellung beispielsweise um 90° in eine teilweise geöffnete Zwischenstellung gebracht werden kann. In dieser teilweise geöffneten Zwischenstellung fluchtet die Heckdrehtür im Wesentlichen mit einer Seitenwand des Fahrzeugs. Somit ist gewährleistet, dass die Heckdrehtür nicht seitlich in die Umgebung des Fahrzeuges ragt, wo andere Verkehrsteilnehmer gestört werden könnten. Allerdings ist der Öffnungsbereich in dieser teilweise geöffneten Stellung der Heckdrehtür nicht besonders gut zugänglich, so dass Bedarf besteht, die Heckdrehtür weiter zu öffnen. Wird die Heckdrehtür aus ihrer Geschlossenstellung um 180° verschwenkt, so ist der Transportraum des Fahrzeuges vom Heckbereich aus gut zugänglich, jedoch ragt die Heckdrehtür seitlich vom Fahrzeug ab und ist damit geeignet, andere Verkehrsteilnehmer zu stören und/oder zu gefährden. Es besteht daher bei vielen Fahrzeugen die Möglichkeit, eine Heckdrehtür aus der Geschlossenstellung heraus um 270° oder annähernd 270° in eine Stellung zu bewegen, in der sie seitlich benachbart zur Seitenwand des Fahrzeugs angeordnet ist, so dass einerseits der Transportraum vom Heckbereich des Fahrzeug aus gut zugänglich ist und andererseits das Fahrzeug bei geöffneter Heckdrehtür nur möglichst wenig Platz beansprucht wird.

Das Problem bei dieser 270° Stellung der Heckdrehtür besteht darin, dass eine ebenfalls am Fahrzeug, an einer Seitenwand angebrachte Schiebetür beim Öffnen mit der auf einer 270° Stellung stehenden Heckdrehtür kollidieren kann. Durch eine derartige Kollision kann es zu erheblichen Schäden an beiden Türen kommen.

Die EP 531 179 B1 beschreibt eine Kollisionsschutzvorrichtung für eine seitliche Schiebetür eines Kraftwagens, die die Schiebetür bei einer drohenden Kollision mit einer ebenfalls an der Fahrzeugseite angebrachten offenen Tankklappe blockiert.

Eine derartige Kollisionsschutzvorrichtung ist jedoch nicht dafür geeignet, die Bewegung einer Schiebetür derart zu begrenzen, dass sie nicht in den Bewegungsbereich einer Heckdrehtür gerät.

Die Aufgabe der Erfindung besteht darin, eine geeignete Kollisionsschutzvorrichtung bereitzustellen, die eine Kollision zwischen einer Heckdrehtür und einer Schiebetür eines Kraftwagens verhindert.

Die Lösung der Aufgabe besteht in einer Kollisionsschutzvorrichtung mit den Merkmalen des Patentanspruchs 1.

Die erfindungsgemäße Kollisionsschutzvorrichtung nach Patentanspruch 1 verhindert bei der Öffnungsbewegung einer Schiebetür eines Kraftwagens, dass diese in den Bewegungsbereich eines weiteren am Kraftwagen angebrachten Schwenkelementes, in diesem Falle einer Heckdrehtür gerät. Hierbei ist ein Detektor vorgesehen der eine Position der Heckdrehtür erfasst und der mit einer Anhaltevorrichtung zusammenwirkt, wobei die Anhaltevorrichtung ein Anhalten beziehungsweise eine Wegbegrenzung der Schiebetür in einem drohenden Kollisionsfall zwischen der Schiebetür und der Heckdrehtür bewirkt.

Unter Detektor wird hierbei jede Vorrichtung verstanden, die geeignet ist, die Position der Heckdrehtür zu erfassen. Der Detektor kann beispielsweise elektromechanisch, optisch, hydraulisch, pneumatisch oder kapazitiv betrieben sein. Durch den Detektor oder einem ihm angeschlossenen Wandler wird ein geeignetes Signal erzeugt, das wiederum über ein geeignetes Übertragungsmedium an die Anhaltevorrichtung weitergeleitet wird. Auf Grund dieses Signals erfolgt die Betätigung der Anhaltevorrichtung, wodurch ein Anhalten oder ein Freigeben der Schiebetür bewirkt wird.

Die Erfindung zeichnet sich dadurch aus, dass an der Heckdrehtür ein Türfeststeller vorgesehen ist, der einerseits kraftwagenseitig um eine, zur Achse der Türscharniere parallel verlaufende Schwenkachse schwenkbar gelagert ist und der andererseits an der Heckdrehtür ebenfalls schwenkbar gelagert ist und mit dieser in Verbindung steht und dass der Detektor zur Erfassung der Position der Heckdrehtür am Türfeststeller angeordnet ist. In der Regel wirkt der Detektor in der Art, dass er die Position des Türfeststellers bei einer Öffnungsbewegung der Heckdrehtür bestimmt. Die Position des Türfeststellers korrespondiert jeweils mit einer Position der Heckdrehtür.

Diese Anordnung des Detektors am Türfeststeller weist den Vorteil auf, dass genügend Bauraum zur Unterbringung des Detektors zur Verfügung steht, ferner lässt sich der Öffnungszustand und die Position der Heckdrehtür durch die Schwenkbewegung des Türfeststellers in besonders einfacher Art und Weise zuverlässig bestimmen.

In einer Ausgestaltungsform der Erfindung ist eine konkrete Zwischenstellung der Heckdrehtür vorgesehen, bei deren Überschreitung die Begrenzung eines Verschiebeweges der Schiebetür in ihrer Öffnungsrichtung durch die Anhaltevorrichtung erfolgt. Somit ist gewährleistet, dass die Schiebetür vollständig öffenbar ist, solange die Heckdrehtür in einer, für die Schiebetür unkritischen Position verweilt.

Hierbei kann es zweckmäßig sein, dass die Heckdrehtür in der Zwischenstellung arretiert ist. Diese Arretierung kann wiederum in zweckmäßiger Weise durch den Türfeststeller erfolgen.

In einer Ausgestaltungsform der Erfindung kann der Türfeststeller von der Heckdrehtür gelöst werden. Dies kann beispielsweise durch das Aushaken des Türfeststellers aus einer Schwenkanordnung erfolgen. Hierbei ist dann die Heckdrehtür über die Zwischenbewegung hinaus bewegbar. Es ist dann erfindungsgemäß vorgesehen, dass die Anhaltevorrichtung die Begrenzung des Verschiebeweges der Schiebetür bewirkt, wenn der Türfeststeller von der Heckdrehtür gelöst worden ist.

Der Türfeststeller kann auch in der Form ausgestaltet sein, dass er ohne von der Heckdrehtür gelöst zu werden durch erhöhten Kraftaufwand über die Arretierung der Zwischenstellung hinaus eine Bewegung der Heckdrehtür zulässt.

In einer vorteilhaften Ausgestaltungsform der Erfindung ist zumindest in einer Schwenkachse des Türfeststellers eine Nocke vorgesehen, die zur Betätigung des Detektors dient. Unter Nocke wird hierbei eine hervorstehende Kontur eines Betätigungsmittels bezeichnet, die bei einer Bewegung insbesondere einer Drehbewegung zur Betätigung des Detektors geeignet ist. Insbesondere zählen hierzu Nockenscheiben oder Kurvenscheiben. Als äquivalent anzusehen ist auch eine vertiefende Kontur des Betätigungsmittels, die zur selben Wirkung, nämlich zur Betätigung des Detektors geeignet ist.

In einer weiteren Ausgestaltungsform der Erfindung ist der Detektor in Form eines Mikroschalters ausgestaltet. Hierbei wird durch einen mechanischen Schaltvorgang ein elektrisches Signal erzeugt, das an die Anhaltevorrichtung weitergegeben wird. Insbesondere in der Kombination mit einer Nocke, die zur Betätigung des Mikroschalters dient, lässt sich der Öffnungswinkel der Heckdrehtür in besonderst geeigneter Form überwachen.

In einer weiteren geeigneten Ausgestaltungsform der Erfindung erfolgt beim Lösen des Türfeststellers aus einer der Schwenkanordnungen eine Aktivierung der Anhaltevorrichtung. Dies ist vorteilhaft, da in dem Moment wo ein Benutzer den Türfeststeller aus seiner Feststellposition heraus löst, die Gefahr besteht, dass die Heckdrehtür mit der Schiebetür kollidiert und es hierbei zweckmäßig ist, dass die Anhaltevorrichtung aktiviert wird.

Ferner kann an der Anhaltevorrichtung der Schiebetür eine überfahrbare Zwischenarretierung vorgesehen sein. Diese Zwischenarretierung hält die Schiebetür in einer gewünschten Position, unabhängig vom Aktivieren oder Deaktivieren der Anhaltevorrichtung. Durch einen erhöhten Kraftaufwand, der durch den Benutzer aufzubringen ist, lässt sich die Schiebetür dann aus der Zwischenarretierung heraus bewegen.

Dabei ist es zweckmäßig, dass die Zwischenarretierung die Schiebetür in beide Bewegungsrichtungen, also in einer Öffnungsrichtung und einer Schließrichtung arretiert. Hierbei sollte eine Arretierung in die Schließrichtung durch die Zwischenarretierung auch dann erfolgen, wenn die Anhaltevorrichtung die Schiebetür sperrt. Hierdurch wird verhindert, dass in diesem Sperrfall die Schiebetür ungewollt zurück in ihrer Schließposition rollt.

Bevorzugte Ausgestaltungsformen der Erfindung sind anhand der folgenden Figuren näher erläutert.

Dabei zeigen:
- Fig. 1: eine Draufsicht auf ein Fahrzeug mit den Bewegungsbereichen einer Schiebetür und einer Heckdrehtür,
- Fig. 2: die Rückansicht einer Heckdrehtür mit der Einbaulage eines Türfeststellers**,**
- Fig. 3: ein Türfeststeller,

- Fig. 4: eine vergrößerte Darstellung eines Türfeststellerscharniers,
- Fig. 5: eine Anhaltevorrichtung und
- Fig. 6: eine Anhaltevorrichtung in Einbaulage mit Laufwagen einer Schiebetür.

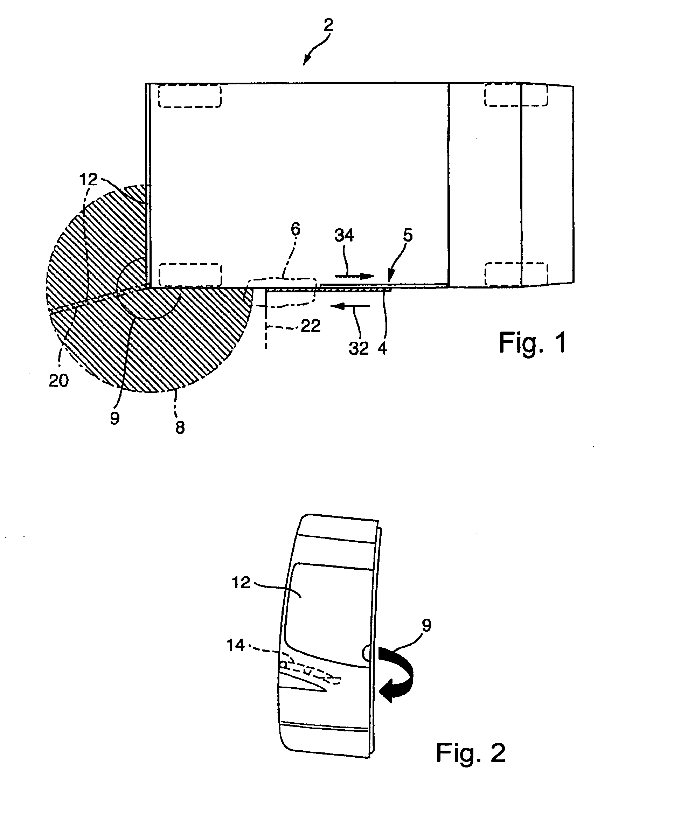

In Figur 1 ist eine Draufsicht auf einen Kraftwagen 2 abgebildet, in der die Bewegung einer Schiebetür 4 sowie einer Heckdrehtür 12 zu erkennen ist. Die Heckdrehtür 12 lässt sich entlang des schraffierten Bereiches 8 von ihrer Schließstellung zu ihrer Offenstellung um insgesamt 270° drehen (Schließstellung entspricht hierbei der 0°-Position). Hierbei ist eine Zwischenstellung 20 vorgesehen, in der die Heckdrehtür 12 arretierbar ist. Die Zwischenstellung 20 befindet sich üblicher Weise zwischen einem Drehwinkel 9, der zwischen 90° und 105° beträgt.

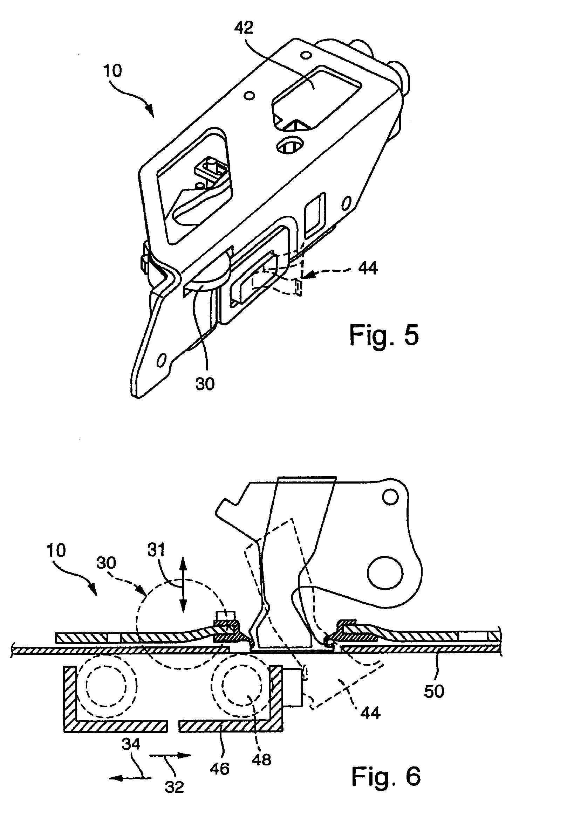

Die Schiebetür 4 kann von einer geschlossenen Stellung 5 in Bewegungsrichtung des Pfeiles 32 geöffnet werden. Hierbei ist es möglich, dass sie in einer vollständig geöffneten Stellung (hier nicht dargestellt) in den Bewegungsbereich 8 der Heckdrehtür 12 gerät. Im Falle einer um 270° geöffneten Heckdrehtür 12 würde es hierbei zu einer Kollision zwischen der Heckdrehtür 12 und der Schiebetür 4 kommen. Deshalb ist eine Anhaltevorrichtung 10 (in Figur 1 nicht näher dargestellt, vergleiche Figur 5 und 6) die in dem von der gestrichelten Linie 6 umgebenen Bereich, angeordnet ist, vorgesehen. Die Anhaltevorrichtung 10 bewirkt eine Begrenzung des Schiebeweges der Schiebetür 4 im Punkt 22. Somit ist die Schiebetür 4 teilweise geöffnet, sie kann jedoch nicht in den Bewegungsbereich 8 der Heckdrehtür 12 gelangen.

In Figur 2 ist eine Heckdrehtür 12 dargestellt, wobei der Betrachter von hinten auf den Kraftwagen 2 mit der Heckdrehtür 12 blickt. Es handelt sich hierbei um eine linke Heckdrehtür die ebenfalls wie in Figur 1, wo es sich um eine rechte Heckdrehtür 12 handelt, um 270° öffenbar ist. Der Pfeil 9 in Figur 2 deutet den gleichen Drehbereich um 270° an, wie er auch in Figur 1 dargestellt ist.

In Figur 2 ist durch eine gestrichelte Linie der Türfeststeller 14 angedeutet, der an der Innenseite der Heckdrehtür 12 angeordnet ist. Der Türfeststeller 14 ist einerseits kraftfahrzeugseitig an einer, hier nicht dargestellten D-Säule am Fahrzeug befestigt. Die D-Säule wird in dieser Ansicht durch die Heckdrehtür 12 verdeckt. In seinem zweiten Endbereich ist der Türfeststeller 14 an der Heckdrehtür 12 befestigt.

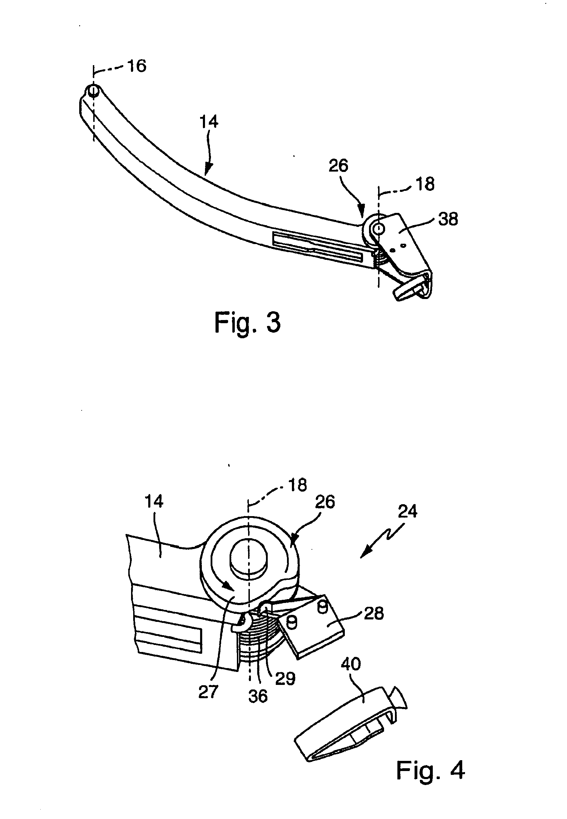

In Figur 3 ist eine Gesamtansicht des Türfeststellers 14 gegeben. Der Türfeststeller 14 ist um die Achsen 16 und 18 schwenkbar gelagert. Hierbei ist der Türfeststeller 14 mit der Achse 16 schwenkbar an der D-Säule gelagert. An der Heckdrehtür 12 ist der Türfeststeller 14 mit einem Scharnierschenkel 38 beziehungsweise dem Befestigungselement 40 lösbar befestigt. Ein Schwenken des Türfeststeller 14 erfolgt hierbei um die Schwenkachse 18. Der Scharnierschenkel 38, das Befestigungselement 40 sowie der Endbereich des Türfeststellers 14 mit der Schwenkachse 18 bilden zusammen die Schwenkanordnung 24.

In Figur 4 ist die Schwenkanordnung 24 näher hervorgehoben, wobei der Scharnierschenkel 38 der Übersichtlichkeit halber ausgeblendet ist. In Figur 4 ist um die Schwenkachse 18 eine Nockenscheibe 26 angeordnet. Die Nockenscheibe 26 ist ortsfest zum Türfeststeller 14 angeordnet. Ferner ist ein im Bewegungsbereich der Nockenscheibe 26 befindlicher Mikroschalter 28 vorgesehen. Der Mikroschalter 28 ist an dem, in Figur 4 nicht dargestellten Scharnierschenkel 38 befestigt. Der Scharnierschenkel 38 wiederum ist mit dem Befestigungselement 40 lösbar an der Heckdrehtür 12 angebracht.

Somit erfolgt beim Öffnen der Heckdrehtür 12 eine Relativbewegung zwischen dem Scharnierschenkel 38 und der Nockenscheibe 26. Beim Überschreiten eines bestimmten, kritischen Öffnungswinkels betätigt die Nocke 27 an der Nockenscheibe 26 einen Taster 29 des Mikroschalters 28. Hierdurch wird ein elektrisches Signal erzeugt, das an die Anhaltvorrichtung 10 in Figur 5 weitergeleitet wird.

Das elektrische Signal, das bevorzugt durch ein herkömmliches Kupferkabel weitergeleitet wird, erzeugt eine Bewegung des Elektromotors 42 in der Anhaltevorrichtung 10. Der Elektromotor 42 ist hier lediglich ein exemplarisches Beispiel für die Anwendung eines Stellelementes an sich. Grundsätzlich sind auch andere Arten der Betätigung der Anhaltevorrichtung denkbar, wie beispielsweise ein rein mechanisches Federelement oder eine elektrohydraulische oder elektropneumatische Stellelementvorrichtung.

Die Anhaltevorrichtung 10 in Figur 5 weist weiterhin ein Sperrelement 44 auf, dessen Wirkungsweise in Figur 6 durch die gestrichelte Linie näher erläutert ist. Zunächst befindet sich das Sperrelement 44 (durchgezogene Linie) in seiner Ruheposition. Durch den, in Figur 6 nicht dargestellten Elektromotor 42 wird das Stellelement 44 ausgefahren (vergleiche gestrichelte Linie). Ein Laufwagen 46 wird entlang einer Führungsschiene 50 in Richtung des Öffnungsweges 32 der Schiebetür 4 bewegt. Der Laufwagen 46 ist mit der Schiebetür 4 verbunden, durch den Laufwagen 46 ist die Schiebetür 4 in die Führungsschiene 50 eingehängt. Der Laufwagen 46 weist weiterhin Rollen 48 auf, durch die eine Bewegung des Laufwagens 46 in der Führungsschiene 50 gewährleistet werden. Durch das ausgefahrene Sperrelement 44 (gestrichelte Linie) wird der Laufwagen 46 an seiner weiteren Bewegung in Richtung 32 gehindert. Die Schiebetür 4 lässt sich somit nicht weiter öffnen und ein Kollision mit der Heckdrehtür 12 wird verhindert.

Die Anhaltevorrichtung 10 weist ferner eine Zwischenarretierungsvorrichtung 30 auf, die in Form eines Rades ausgebildet ist. Die Zwischenarretierung 30 ist entlang des Pfeiles 31 federnd bewegbar. Hierbei ist die Zwischenarretierung 30 durch die Rollen 48 des Laufwagens 46 überfahrbar. Durch Überfahren des Laufwagens 46 wird die Zwischenarretierung 30 entlang des Pfeiles 31 von der Schiene 50 weggedrückt. Hierzu ist jedoch ein gewisser erhöhter Kraftaufwand bei der Betätigung der Schiebetür 4 durch den Benutzer notwendig. Erfolgt dieser erhöhte Kraftaufwand nicht, so verharrt die Schiebetür 4 in der in Figur 6 dargestellten Stellung. Sie verharrt in dieser Stellung auch dann, wenn das Sperrelement 44 nicht ausgefahren ist. Diese Zwischenarretierungsstelle ist von praktischem Nutzen für den Benutzer der Schiebetür. Sie muss somit nicht für jeden Anwendungsfall bis zum äußersten Anschlag geöffnet werden, was Zeit und Mühe für den Benutzer spart.

In Figur 6 ist ferner zu erkennen, dass die Zwischenarretierung 30 in der Art wirkt, dass die Schiebetür 4 im Fall einer Bewegungsbegrenzung durch die Anhaltevorrichtung 10, insbesondere durch das Sperrelement 44 auch nicht in ihrer Schließposition entlang des Pfeiles 34 zurückbewegt werden kann. Für eine derartige Rückbewegung entlang des Pfeiles 34 wird im Fall der Figur 6 ein erhöhter Kraftaufwand des Benutzers erforderlich. Der Benutzer wird dies nur dann tun, wenn er die Schiebetür 4 auch wirklich schließen will. Hierdurch wird verhindert, dass die Schiebetür 4 im Begrenzungsfall durch die Anhaltevorrichtung 10 gestoppt wird, hierbei am Sperrelement 44 abprallen würde und zurück in ihrer Schließposition rollen würde. Diese Anordnung zwischen Zwischenarretierung 30 und Sperrelement 44 dient zur Vermeidung von Personenverletzungen oder anderen Sachschaden durch eine zurückrollende Schiebetür 4.

Im Weiteren sei noch auf die Bewegung und die Betätigung der Heckdrehtür 12 eingegangen. Zur Figur 1 wurde bereits auf die Zwischenstellung 20 der Heckdrehtür 12 eingegangen. Die Zwischenstellung 20 ist durch eine Arretierung begründet, die durch den Türfeststeller 14 erfolgt. Der Türfeststeller 14 ist so ausgelegt, dass die Heckdrehtür 12 bei einem maximalen Öffnungswinkel von ca. 100° in der Zwischenstellung 20 arretiert. Nun ist es aber in vielen Fällen zweckmäßig, wie bereits einleitend beschrieben, die Heckdrehtür 12 weiter entlang des Öffnungspfeiles 9 bis zu einer 270° Öffnung zu öffnen. Dies kann geschehen, in dem der Türfeststeller 14 durch den Benutzer am Befestigungselement 40 (vergleiche Figur 3, Figur 4) ausgehängt wird. Beim Aushängen des Türfeststellers 14 wird der Scharnierschenkel 38 durch ein Federelement 36 in der Weise bezüglich der Schwenkachse 18 bewegt, dass die Nocke 27 mit dem Taster 29 des Mikroschalter 28 in Kontakt kommt und das elektrische Signal, das bereits beschrieben wurde ausgelöst wird. Durch dieses elektrische Signal wird die Schiebetür 4 durch die Anhaltevorrichtung 10 wie beschrieben in ihrer Bewegung begrenzt. Die Anordnung der Nocke 27 bezüglich des Tasters 29 ist in derart gewählt, dass bis zu einer Zwischenstellung 20 entlang der Öffnung 9 der Heckdrehtür 12 kein Signal an die Anhaltevorrichtung 10 erfolgt.

Grundsätzlich können jedoch auch andere Türfeststeller 14 eingesetzt werden, die eine 270° Drehung der Heckdrehtür 12 erlauben, ohne dabei ausgehängt zu werden. Dies kann beispielsweise durch einen Teleskopfeststeller oder durch eine andere technische Lösung erfolgen. Eine Zwischenstellung analog der Zwischenstellung 20 in Figur 1 ist hierbei nicht in jedem Fall erforderlich. Auch in einer derartigen Ausgestaltung ist es zweckmäßig einen Detektor zur Überwachung des Öffnungswinkels 9 der Heckdrehtür 12 an diesen, andersgearteten Türfeststeller anzubringen. Auch dieser Detektor kann in vorteilhafter Weise durch eine Nockenscheibe beziehungsweise durch eine Nocke allgemein und einen Mikroschalter mit einem Taster ausgestaltet sein. Auch in diesem Fall würde elektrisches Signal an die Anhaltevorrichtung 10 ergehen.

## Patentansprüche

1. Kollisionsschutzvorrichtung zum Verhindern der Öffnungsbewegung (32) einer Schiebetür (4) eines Kraftwagens (2) in einen Bewegungsbereich (8) eines weiteren an dem Kraftwagen (2) angebrachten Schwenkelementes, wobei ein Detektor für eine Erfassung einer Position des Schwenkelementes vorgesehen ist, der mit einer Anhaltevorrichtung (10) zusammenwirkt, durch die in einem drohenden Kollisionsfall ein Anhalten der Schiebetür (4) erfolgt,
**dadurch gekennzeichnet,**
• **dass** das Schwenkelement eine Heckdrehtür (12) ist und
• an der Heckdrehtür (12) ein mit dem Detektor versehener Türfeststeller (14) vorgesehen ist, der kraftwagenseitig um eine, zur Achse der Türscharniere parallel verlaufenden Schwenkachse (16) schwenkbar gelagert ist und mit der Heckdrehtür (12) ebenfalls schwenkbar in Verbindung steht.

2. Kollisionsschutzvorrichtung nach Anspruch 1,
**dadurch gekennzeichnet,**
**dass** nach Überschreiten einer Zwischenstellung (20) der Heckdrehtür (12) eine Begrenzung eines Verschiebeweges (22) der Schiebetür (4)in eine Öffnungsrichtung durch die Anhaltevorrichtung (10) erfolgt.

3. Kollisionsschutzvorrichtung nach Anspruch 2,
**dadurch gekennzeichnet,**
**dass** die Heckdrehtür (12) in der Zwischenstellung (20) arretiert ist.

4. Kollisionsschutzvorrichtung nach Anspruch 2 oder 3,
**dadurch gekennzeichnet,**
**dass** durch den Türfeststeller (14) eine Arretierung der Heckdrehtür (12) in der Zwischenstellung (20) erfolgt.

5. Kollisionsschutzvorrichtung nach einem der Ansprüche 2 bis 4,
**dadurch gekennzeichnet,**
**dass** die Heckdrehtür (12) nach einem Lösen des Türfeststellers (14) aus einer seiner Schwenkanordnungen (24) über die Zwischenstellung (20) hinaus bewegbar ist.

6. Kollisionsschutzvorrichtung nach Anspruch 5,
**dadurch gekennzeichnet,**
**dass** beim Lösen des Türfeststellers aus einer der Schwenkanordnungen (24) eine Aktivierung der Anhaltevorrichtung (10) erfolgt.

7. Kollisionsschutzvorrichtung nach einem der Ansprüche 2 bis 4,
**dadurch gekennzeichnet,**
**dass** die Heckdrehtür (12) durch einen erhöhten Kraftaufwand über die Arretierung in der Zwischenstellung (20) hinaus bewegbar ist.

8. Kollisionsschutzvorrichtung nach einem der vorhergehenden Ansprüche,
**dadurch gekennzeichnet,**
**dass** im Bereich mindestens einer Schwenkachse (18) des Türfeststellers eine Nocke vorgesehen ist, die zur Betätigung des Detektors dient.

9. Kollisionsschutzvorrichtung nach einem der vorhergehenden Ansprüche,
**dadurch gekennzeichnet,**
**dass** der Detektor in Form eines Mikroschalters (28) ausgestaltet ist.

10. Kollisionsschutzvorrichtung nach einem der Ansprüche 1 bis 9,
**dadurch gekennzeichnet,**
**dass** an der Anhaltevorrichtung (10) eine, durch einen erhöhten Kraftaufwand überfahrbaren Zwischenarretierung (30) der Schiebetür (4) vorgesehen ist.

11. Kollisionsschutzvorrichtung nach Anspruch 10,
**dadurch gekennzeichnet,**
**dass** die Zwischenarretierung (30) der Schiebtür (4) diese in beide Bewegungsrichtungen (32,34) arretiert.

12. Kollisionsschutzvorrichtung nach Anspruch 10 oder 11,
**dadurch gekennzeichnet,**
**dass** die Zwischenarretierung (30) der Schiebetür (4) diese im Zustand der Begrenzung des Verschiebeweges (22) in eine Schließrichtung zwischenarretiert.
